# EUROPÄISCHE PATENTSCHRIFT

(11) **EP 1 016 454 B1**
(45) Veröffentlichungstag und Bekanntmachung des Hinweises auf die Patenterteilung: **20.08.2003**
(21) Anmeldenummer: 99125902.9
(22) Anmeldetag: 22.12.1999
(51) Int. Cl.: B01J 2/00, B01J 2/04, B01J 13/06

(54) **Verfahren und Vorrichtung zur Herstellung stabil feinteiliger Pulver**
Process and apparatus for the preparation of stable finely divided powders
Procédé et dispositif de préparation de poudres stables finement divisés

(30) Priorität: 28.12.1998 DE 19860497
(43) Veröffentlichungstag der Anmeldung: 05.07.2000
(73) Patentinhaber: BASF AKTIENGESELLSCHAFT, 67056 Ludwigshafen (DE)
(72) Erfinder: Lockemann, Christian, Dr., 68163 Mannheim (DE); Lüddecke, Erik, Dr., 67112 Mutterstadt (DE); Horn, Dieter, Dr., 69120 Heidelberg (DE)
(74) Vertreter: Isenbruck, Günter, Dr.

(56) Entgegenhaltungen:
- EP-A- 0 706 821
- WO-A-95/21688
- WO-A-97/14407
- GB-A- 2 322 326

## Beschreibung

Die Erfindung bezieht sich auf ein Verfahren und eine Vorrichtung zur Herstellung stabil feinteiliger Pulver.

Die im Rahmen chemisch-technischer Prozesse anfallenden Produkte haben im allgemeinen nicht die gewünschte Partikelgröße und Partikelgrößenverteilung. Bei pharmazeutischen Produkten, bei Produkten für menschliche und tierische Ernährung und bei Pflanzenwirkstoffen führt die grobkristalline Struktur der Produkte zu einer verschlechterten Bioverfügbarkeit. Übliche Verfahren zur Änderung von Partikelgrößen und Partikelgrößenverteilungen sind Mahlung, Sprühtrocknung, Desublimation und Kristallisation aus Lösungen. Bei den mechanischen Verfahren tritt eine zum Teil erhebliche Erwärmung der behandelten Stoffe auf, die bei thermisch labilen Substanzen oder Substanzgemischen zur Zerstörung oder Schädigung der Inhaltsstoffe führen kann. Die thermischen Verfahren, wie z.B. Sublimation oder Gefriertrocknung, sind nur für wenige Stoffe anwendbar. Bei Kristallisationsverfahren werden Lösemittel verwendet, die aus den Feststoffen nur schwer zu entfernen sind und häufig als Abfallstoff anfallen. Durch konventionelle Verfahren lassen sich Wirkstoffe zum Teil auf Partikelgrößen im Submikronbereich zerkleinern. Allerdings agglomerieren die zunächst gebildeten Partikel wieder zu größeren Strukturen, versintern oder unterliegen der Ostwald-Reifung (Veränderung der Patikelgrößenverteilung zu einer Einheitsgröße hin).

Eine Möglichkeit zur Herstellung stabiler Feinstpartikel mit einer Größe von deutlich unter einem Mikrometer besteht in der Fällung in wäßriger Phase, wobei in dieser Phase ein Stabilisator (z.B. ein Schutzkolloid) gelöst ist. Dieser Stabilisator legt sich um die soeben gebildeten Teilchen und schützt sie so vor der Agglomeration und anderen Wachstumsmechanismen. Die Fällung kann aus einem konventionellen Lösungsmittel heraus erfolgen oder aber mit Hilfe von überkritischen Fluiden durchgeführt werden (DE-A 44 45 341). Die beschriebenen Verfahren weisen den Nachteil auf, daß sie zu Dispersionen führen, die mit großem Aufwand getrocknet werden müssen, um als Endprodukt ein trockenes Pulver zu erhalten. In der Veröffentlichung von C.J. Chang und A.D. Randolph: Precipitation of Microsize Organic Particles from Supercritical Fluids, AICh.E J. (1989) Band 35, Nr. 11, Seiten 1876-1882, wird die Herstellung von Feinstpartikeln mit Hilfe von überkritischen Fluiden beschrieben. Neben der Fällung in einer wäßrigen Phase unter Verwendung von Gelatine als Schutzkolloid wird auch das Entspannen eines wirkstoffbeladenen überkritischen Fluids auf Atmosphärendruck ohne Mitwirkung einer Flüssigkeit beschrieben. Hierbei wurde auf einen Stabilisator verzichtet. Die mittlere Partikelgröße betrug in diesem Falle etwa einen Mikrometer.

Ein Verfahren zur Herstellung von Wirkstoff/Trägerkombinationen in Form eines trockenen Pulvers mit Hilfe von überkritischen Fluiden ist in der DE-A 37 44 329 und der US-A 5 043 280 beschrieben. Bei diesem Verfahren wird der Wirkstoff gemeinsam mit einem Träger in einem organischen Lösungsmittel aufgelöst oder suspendiert, die Lösung oder Suspension in eine überkritische Fluidphase hinein versprüht und diese neue Phase entspannt. Dabei entstehen Trägerpartikel, in die der Wirkstoff eingebettet ist, sowie Lösungsmitteltröpfchen, die von Gas abgetrennt werden. Nachteilig bei diesem Verfahren ist der Rest-Lösungsmittelgehalt der Partikel, der eine Rekristallisation und ein damit verbundenes Wachstum (Ostwald-Reifung, s.o.) der Wirkstoffteilchen begünstigt. Außerdem lassen sich mit diesem Verfahren nur mittlere Partikelgrößen bis herab zu mehreren Mikrometern erzeugen.

In dem in der EP-B 0 744 992 beschriebenen Verfahren wird der Wirkstoff, der auch als Gemisch vorgelegt werden kann, bei hohem Druck unter Bildung einer flüssigen Lösung mit einem Gas gesättigt. Bei der anschließenden Entspannung entweicht das Gas aus dem Wirkstoff bzw. dem Substanzgemisch. Die dadurch erreichte Abkühlung führt zum Erstarren des Wirkstoffs, der anschließend als Pulver abgeschieden werden kann. Nachteilig bei diesem Verfahren ist vor allem die mittlere Partikelgröße, die oberhalb von 8 µm liegt.

Aufgabe der vorliegenden Erfindung ist die Bereitstellung eines Verfahrens zur Herstellung von Pulvern, die so stabil sind, daß im wesentlichen keine Agglomeration, kein Versintern und keine Diffusions- und Kristallisationsprozesse von einer Partikel zur anderen möglich sind und die eine mittlere Partikelgröße im Submikronbereich aufweisen.

Eine weitere Aufgabe der Erfindung ist die Bereitstellung einer Vorrichtung zur Durchführung des erfindungsgemäßen Verfahrens.

Die Erfindung geht aus von einem Verfahren zur Herstellung stabil feinteiliger Pulver, bei dem ein oder mehrere Stoffe A und ein oder mehrere Stoffe B in überkritischen Fluiden gelöst und die Lösungen entlang einer Verweilzeitstrecke entspannt werden.

Das Verfahren ist dadurch gekennzeichnet, daß Stoffe A und B in jeweils getrennten überkritischen kompressiblen Fluiden gelöst vorliegen und die Verweilzeitstrecken sich durchdringen, wobei die Löslichkeitsgrenze von A in dem entsprechenden Fluid zu einem früheren Zeitpunkt überschritten wird als die Löslichkeitsgrenze von B in dem entsprechenden Fluid.

Der Begriff "Löslichkeitsgrenze" bezeichnet die bei den jeweiligen Bedingungen herrschende maximale Löslichkeit.

Bei den Stoffen A handelt es sich vorzugsweise um Wirkstoffe, bei den Stoffen B um Hilfsstoffe.

Als "überkritische Fluide" werden im Rahmen der vorliegenden Erfindung Fluide bezeichnet, bei denen sich mindestens Druck oder Temperatur nahe ihres kritischen Drucks bzw. der kritischen Temperatur befinden. Druck und/oder Temperatur müssen den jeweiligen kritischen Größen so weit angenähert sein, daß die Lösungseigenschaften der jeweiligen Fluide für Stoff(e) A und B vergleichbar sind mit den Eigenschaften, die vorliegen, wenn sowohl Druck als auch Temperatur der Fluide oberhalb der jeweiligen kritischen Größe liegen. Im Rahmen der Erfindung umfaßt der Begriff "überkritisches Fluid" also auch Fluide, deren Druck und/oder Temperatur unterhalb der jeweiligen kritischen Größe liegt. Vorzugsweise liegen aber Druck oder Temperatur, insbesondere Druck und Temperatur oberhalb der jeweiligen kritischen Größe.

In einer Ausführungsform des Verfahrens ist der Stoff B oder mindestens einer der Stoffe B ein Stabilisator.

Dem Verfahren liegt die Erkenntnis zugrunde, daß es zur Erzeugung stabiler trockener Wirkstoffpartikel nicht erforderlich und auch nicht zweckmäßig ist, Wirkstoff und Stabilisator gemeinsam in einem überkritischen Fluid zu lösen, sondern daß ein getrenntes Lösen in separaten überkritischen Fluidströmen und eine getrennte Entspannung dieser Lösungen bei einer gegenseitigen Überschneidung der Verweilzeitstrecken technisch durchführbar ist und entscheidende Vorteile bringt. Dazu sind die Verfahrensparameter so zu wählen, daß die Löslichkeitsgrenze des Wirkstoffes in Fluidelementen, die sich auf der Verweilzeitstrecke befinden, schneller überschritten wird als die Löslichkeitsgrenze von Stabilisatoren, die sich in benachbarten Fluidelementen befinden, so daß Wirkstoffpartikel einer mittleren Größe im Submikronbereich entstehen, die als Kristallisationskeime für die Stabilisatorsubstanz wirken, so daß die Wirkstoffpartikel von Stabilisatorsubstanz umhüllt werden.

Durch entsprechende Wahl folgender Parameter kann der Zeitpunkt, in dem sich A bzw. B in einem auf der Verweilzeitstrecke befindlichen Fluidelement ausscheidet, beeinflußt werden:
1. Wahl von B.
2. Wahl der Fluide, in denen A bzw. B gelöst werden.
3. Wahl der Drucke, unter denen die Fluide stehen, die A bzw. B enthalten.
4. Wahl des Druckes, der entlang der Verweilzeitstrecke herrscht.
5. Wahl der Temperatur, die A enthaltende bzw. B enthaltende Fluide aufweisen.
6. Wahl der Länge der Verweilzeitstrecken, die Fluidelemente, die A bzw. B enthalten, zurücklegen müssen, bis sie an den Schnittpunkt der Verweilzeitstrecken gelangen.

Die Stabilisatorsubstanz kann so gewählt werden, daß stabile feinteilige Pulver entstehen, deren Partikel weder agglomerieren noch versintem noch Diffusionsund Kristallisationsprozesse von einer Partikel zur anderen durchlaufen.

Die Wahl von Fluid, Druck und Temperatur kann für die Stoffe A und B unabhängig voneinander gleich oder unterschiedlich sein. Gleiches gilt für die Wahl der Länge der Verweilzeitstrecken. Auch der entlang der Verweilzeitstrecken herrschende Druck ist frei wählbar.

In einer weiteren Ausführungsform des Verfahrens handelt es sich bei den Verweilzeitstrecken um Sprühkegel.

In einer weiteren Ausführungsform des Verfahrens erfolgt die Lösung von Stoff(en) A bzw. B in dem jeweiligen Fluid unter Verwendung von Druckbehältern.

In einer weiteren Ausführungsform des Verfahrens erfolgt die Entspannung durch Entspannungsvorrichtungen, die unabhängig voneinander Düsen, insbesondere Einstoffdüsen oder Koaxial-Zweistoffdüsen, Ventile, Diffusoren, Kapillaren oder Blenden sein können.

In einer weiteren Ausführungsform des Verfahrens wird ein Fluid nach der Entspannung zur Auflösezone zurückgeführt und als komprimiertes Fluid zur Lösung von einem oder mehreren Stoffen A bzw. von einem oder mehreren Stoffen B wiederverwendet.

In einer weiteren Ausführungsform des Verfahrens wird der Partikelstrom durch geeignete Trennvorrichtungen z.B. Zyklone, Gewebefilter, Wäscher oder Elektrofilter abgetrennt.

In einer weiteren Ausführungsform des Verfahrens ist mindestens ein Stoff B ein Polymeres, ein Lipid, ein Kohlenhydrat oder ein Peptid. Als Polymer werden insbesondere Block-Copolymere und fluorierte Polymere bevorzugt. Bei den fluorierten Polymeren handelt es sich vorzugsweise um verzweigte Polymere oder um Block-Copolymere, die fluorierte Endgruppen z.B. vom Typ -(CF₂)₆-CF₃ besitzen. Diese Endgruppen besitzen eine höhere Affinität gegenüber CO₂. Dadurch wird ein Polymer erhalten, das mit unpolaren Substanzen wechselwirken kann, eine größere Löslichkeit gegenüber CO₂ aufweist und unter Umständen wasserdispergierbar ist.

In einer weiteren Ausführungsform des Verfahrens ist mindestens ein Stoff A ein Farbstoff, Vitamin, Carotinoid, Liposom, pharmazeutischer Wirkstoff, Pflanzenwirkstoff, Riechstoff oder Aromastoff.

In einer weiteren Ausführungsform des Verfahrens werden als Fluid C₁-C₆-Kohlenwasserstoffe, C₁-C₄-Alkohole, Schwefelhexafluorid, Stickstoff, Edelgase, gasförmige Oxide, Aceton, halogenierte Kohlenwasserstoffe, Ammoniak oder Wasser oder eine Mischung solcher Stoffe eingesetzt. Als C₁-C₆-Kohlenwasserstoff werden Methan, Ethan, Ethylen, Propan, Propen, n-Butan, i-Butan, n-Pentan, i-Pentan, n-Hexan oder i-Hexan bevorzugt. Als C₁-C₄-Alkohol werden Methanol, Ethanol, Isopropanol, n-Propanol oder Butanole bevorzugt. Gasförmige Oxide sind vorzugsweise Kohlendioxid, Distickstoffoxid oder Schwefeldioxid.

Ein weiterer Gegenstand der Erfindung ist eine Vorrichtung, gekennzeichnet durch einen Hochdruckautoklaven **2** für die Auflösung des/der Stoffe(s) A in einem überkritischen Fluid und einem zweiten Hochdruckautoklaven **6** für die Auflösung des/der Stoffe(s) B in einem überkritischen Fluid und durch zwei getrennte Zuleitungen **3** und **7**, mit denen das mit A bzw. B beladene Fluid mit Entspannungsvorrichtungen **4** bzw. **8** verbunden werden, die die beiden Fluide getrennt entspannen und derart angeordnet sind, daß sich die aus ihnen entweichenden Materialströme mindestens teilweise gegenseitig überschneiden.

Die Erfindung wird im Folgenden anhand der Fig. 1 bis 3 beschrieben. Es zeigt
Fig. 1 den Aufbau der erfindungsgemäßen Vorrichtung,
Fig. 2 die Anordnung zweier Düsen und
Fig. 3 die Anordnung zweier einfacher Düsen.

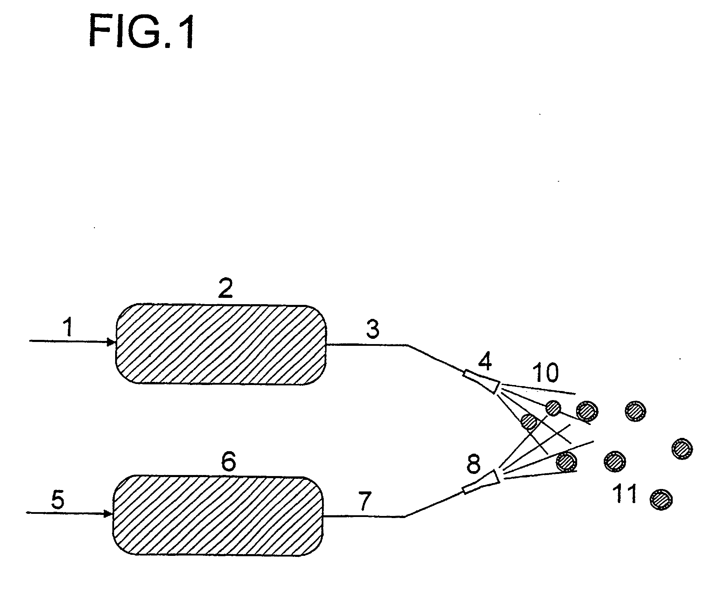

   In Fig. 1 strömt ein Fluid durch eine Zuleitung **1** in einen Hochdruckautoklaven **2**, in dem ein Stoff A vorgelegt ist, und nimmt den Stoff A auf. Ein weiteres Fluid strömt über die Zuleitung **5** in den Hochdruckautoklaven **6**, in dem der/die Stoff(e) B vorgelegt sind, und nimmt den/die Stoff(e) B auf. Bei den Fluiden, die sich in den Hochdruckautoklaven **2** und **6** befinden, kann es sich um ein und denselben Stoff oder um unterschiedliche Stoffe handeln. Ebenso können beide Fluide den gleichen Druck und die gleiche Temperatur aufweisen, oder sich in beiden Parametern unterscheiden; sie sollten aber im Sinne der oben gegebenen Definition überkritisch sein. Die Zuleitungen **3** und **7** verbinden die Hochdruckautoklaven **2** und **6** mit den entsprechenden Entspannungsvorrichtungen **4** und **8**, so daß eine Vermischung beider Fluide vor der Entspannung vermieden wird. Die Entspannungsvorrichtungen sind als Hochdruckdüsen ausgebildet. Die Entspannungsvorrichtungen **4** und **8** sind so angeordnet, daß sie Sprühkegel erzeugen, die sich durchdringen.
   Durch geeignete Wahl der Betriebsparameter der Vorrichtung bilden sich zunächst Partikel **10**, die aus dem Stoff A bestehen. Um diese Partikel bildet sich eine Hülle, die aus dem Stoff B besteht. Der erhaltene Partikelstrom **11** kann mit geeigneten Mitteln, z.B. durch einen Zyklon, einen Gewebefilter, einen Membranfilter, einen Wäscher oder ein Elektrofilter abgetrennt werden.

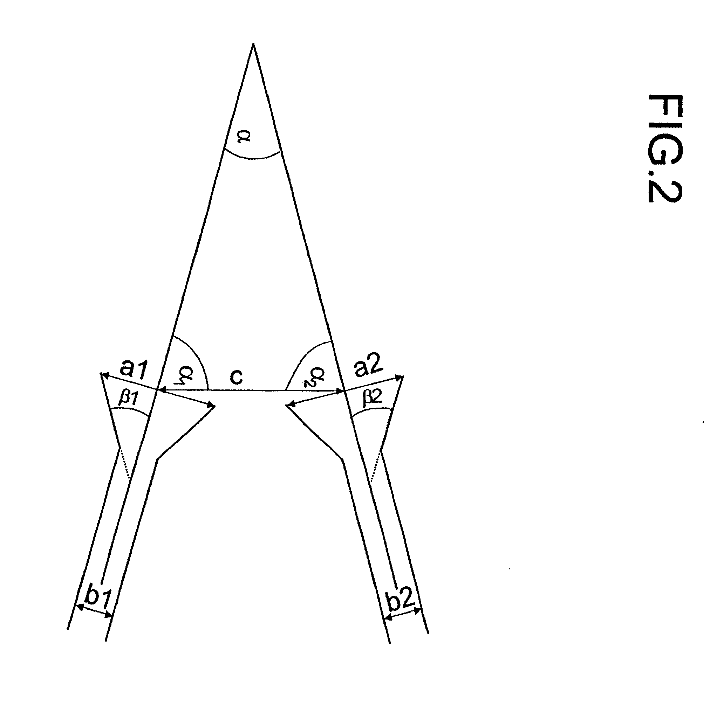

   In Fig. 2 wird die geometrische Anordnung zweier Düsen beschrieben. Hierbei bezeichnet **a** den Öffnungsdurchmesser der Düse und **b** den Durchmesser der Zuleitung unmittelbar vor der Düse. Der Winkel α bezeichnet den Winkel, den die Achsen der Düsen miteinander bilden. Der Winkel α₁ bezeichnet den Winkel zwischen der Achse der ersten Düse und der Verbindungsgeraden zwischen dem Öffnungsmittelpunkt von Düse 1 und 2. Der Winkel β bezeichnet den Öffnungswinkel der Düsen. Der Abstand zwischen dem Mittelpunkt beider Düsenöffnungen wird mit **c** gekennzeichnet. Alle geometrischen Angaben, die sich auf die erste Düse beziehen, erhalten als Index 1, diejenigen, die sich auf die zweite Düse beziehen, erhalten als Index 2.

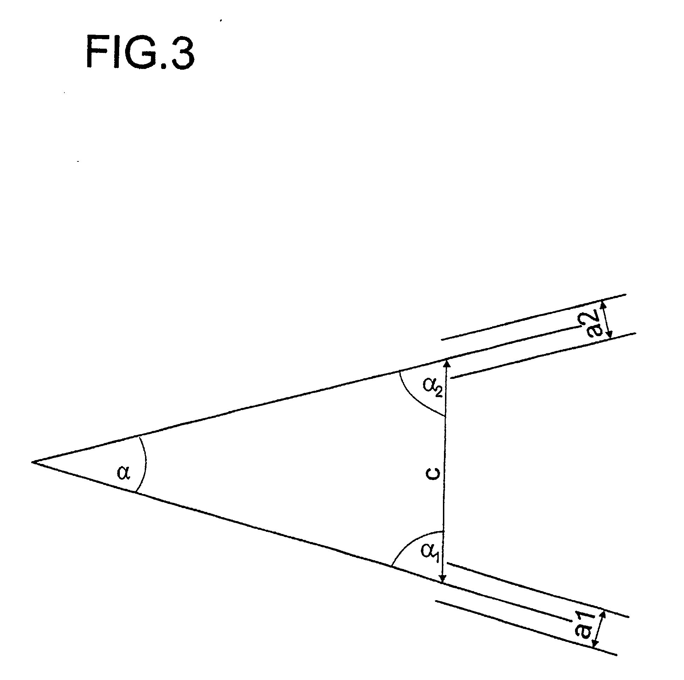

   In Fig. 3 wird die geometrische Anordnung zweier einfacher Düsen beschrieben, für die der Sonderfall **a** = **b** zutrifft. Für die Bezugszeichen ergeben sich Bedeutungen analog zu Fig. 2.

### Beispiel 1:

In einem auf 50°C temperierten Autoklaven mit 250 ml Inhalt wurde etwa 5 g β-Carotin vorgelegt. Ein CO₂-Strom (0,8 kg/h) wurde auf 250 bar komprimiert und auf 50°C vorgewärmt und in den Autoklaven geleitet. Der mit Carotin beladene überkritische CO₂-Strom wurde anschließend zur einer ersten Düse geleitet. In einem zweiten temperierten Autoklaven mit 250 ml Inhalt wurden 10 g eines Block-Copolymers auf der Basis von Maleinsäureanhydrid und einem Gemisch aus C₂₀- bis C₂₄-Olefinen vorgelegt. Auch durch diesen Autoklaven wurde ein CO₂-Strom (0,8 kg/h) bei 250 bar und 50°C geleitet und anschließend zu einer zweiten Düse geführt. Beide Düsen waren einfache Düsen mit einem Durchmesser **a**_{**1**} bzw. **a**_{**2**} von jeweils 50 µm. Sie waren in einem Abstand **c** von 20 mm in Form eines gleichschenkligen Dreiecks angeordnet (α₁ = α₂). Der Winkel α, den die Achsen beider Düsen bildeten, betrug 30°. Folglich überlappten sich die Sprühkegel beider Düsen.

Bei der Entspannung beider Fluidströme wurde ein feinteiliges Pulver mit einem mittleren Partikeldurchmesser von 400 nm ausgeschieden. Transmissionselektronenmikroskop-Aufnahmen zeigen, daß die Vereinzelung der Wirkstoffpartikel gelang: Der Wirkstoff β-Carotin lag als kugelförmiger Kern vor, um den sich das Polymer als gleichmäßige Hülle legte.

### Beispiel 2:

Die Versuchsbedingungen von Beispiel 1 wurden beibehalten, jedoch wurde in dem zweiten Autoklaven 10 g Methylpalmitat anstelle des Blockpolymers vorgelegt. Transmissionselektronenmikroskop-Aufnahmen zeigen, daß auch hier die Vereinzelung der Wirkstoffkerne gelang: β-Carotin lag als Kern vor, der von Methylpalmitat umgeben war. Die Partikel wiesen einen mittleren Durchmesser von etwa 300 nm auf, jedoch zeigten sie im Gegensatz zu den in Beispiel 1 beschriebenen eine wenn auch schwache Agglomerationsneigung.

### Beispiel 3:

Wiederum wurden die Versuchsbedingungen aus Beispiel 1 gewählt. Jedoch wurde als Fluidstrom, der zur Aufnahme des Wirkstoffs (β-Carotin) bestimmt war, N₂O bei 100 bar und 50°C (0,8 kg/h) eingesetzt. Dieser Fluidstrom wurde in den ersten Autoklav geleitet, in dem β-Carotin vorgelegt war. Der zweite Autoklav mit dem vorgelegten Block-Copolymer wurde von CO₂ (0,8 kg/h) bei 250 bar und 50°C durchströmt. Nach dem Entspannen bildete sich in den überlappenden Sprühkegeln ein feinteiliges Pulver mit einem mittleren Partikeldurchmesser von 500 nm. Transmissionselektronenmikroskop-Aufnahmen wiesen auch hier die Vereinzelung der Partikel mit einem Kern aus β-Carotin und einer gleichmäßigen Polymerhülle nach.

## Patentansprüche

1. Verfahren zur Herstellung stabil feinteiliger Pulver, bei dem ein oder mehrere Stoffe A und ein oder mehrere Stoffe B in überkritischen Fluiden gelöst werden und die Lösungen entlang einer Verweilzeitstrecke entspannt werden, **dadurch gekennzeichnet, daß** (die)
- Stoff(e) A und Stoff(e) B in jeweils getrennten überkritischen kompressiblen Fluiden gelöst werden;
- die Verweilzeitstrecken sich durchdringen, wobei die Löslichkeitsgrenze von A in dem entsprechenden Fluid zu einem früheren Zeitpunkt überschritten wird als die Löslichkeitsgrenze von B in dem entsprechenden Fluid.

2. Verfahren nach Anspruch 1, **dadurch gekennzeichnet, daß** mindestens ein Stoff B ein Stabilisator ist.

3. Verfahren nach einem der vorhergehenden Ansprüche, **dadurch gekennzeichnet, daß** die Verweilzeitstrecken Sprühkegel sind.

4. Verfahren nach einem der vorhergehenden Ansprüche, **dadurch gekennzeichnet, daß** die Auflösung von Stoff A und/oder Stoff B in dem jeweiligen Fluid unter Verwendung von Druckbehältern erfolgt.

5. Verfahren nach einem der vorhergehenden Ansprüche, **dadurch gekennzeichnet, daß** die Entspannung durch Entspannungsvorrichtungen erfolgt.

6. Verfahren nach einem der vorhergehenden Ansprüche, **dadurch gekennzeichnet, daß** ein Fluid zur Auflösezone zurückgeführt und als komprimiertes Fluid zur Lösung von Stoff A und/oder Stoff B wiederverwendet wird.

7. Verfahren nach einem der vorhergehenden Ansprüche, **dadurch gekennzeichnet, daß** der Partikelstrom durch geeignete Trennvorrichtungen z.B. Zyklone, Gewebefilter, Wäscher oder Elektrofilter abgetrennt wird.

8. Verfahren nach einem der vorhergehenden Ansprüche, **gekennzeichnet dadurch, daß** mindestens ein Stoff B ein Polymer, Lipid, Kohlenhydrat oder Peptid ist.

9. Verfahren nach einem der vorhergehenden Ansprüche, **dadurch gekennzeichnet, daß** mindestens ein Stoff A ein Farbstoff, Vitamin, Carotinoid, Liposom, pharmazeutischer Wirkstoff, Pflanzenwirkstoff, Riechstoff oder Aromastoff ist.

10. Verfahren nach einem der vorhergehenden Ansprüche, **dadurch gekennzeichnet, daß** es sich bei mindestens einem Fluid um C₁-C₆-Kohlenwasserstoffe, C₁-C₄-Alkohole, Schwefelhexafluorid, Stickstoff, Edelgase, gasförmige Oxide, Aceton, halogenierte Kohlenwasserstoffe, Ammoniak oder Wasser oder um eine Mischungen aus diesen genannten Stoffen handelt.

11. Vorrichtung zur Durchführung eines Verfahrens nach einem der vorhergehenden Ansprüche, **gekennzeichnet durch** einen Hochdruckautoklaven (2) für die Auflösung des/der Stoffe(s) A in einem überkritischen Fluid und einem zweiten Hochdruckautoklaven (6) für die Auflösung des/der Stoffe(s) B in einem überkritischen Fluid und **durch** zwei getrennte Zuleitungen (3) und (7), mit denen das mit A bzw. B beladene Fluid mit Entspannungsvorrichtungen (4) bzw. (8) verbunden werden, die die beiden Fluide getrennt entspannen und derart angeordnet sind, daß sich die aus ihnen entweichenden Materialströme mindestens teilweise gegenseitig überschneiden.

## Claims

1. A process for producing stably fine-particle powders in which one or more substances A and one or more substances B are dissolved in supercritical fluids, and the solutions are decompressed along a holdup section, wherein
- substance(s) A and substance(s) B are each dissolved in separate supercritical compressible fluids;
- the holdup sections interpenetrate, with the solubility limit of A in the appropriate fluid being exceeded at an earlier time than the solubility limit of B in the appropriate fluid.

2. A process as claimed in claim 1, wherein at least one substance B is a stabilizer.

3. A process as claimed in either of the preceding claims, wherein the holdup sections are spray cones.

4. A process as claimed in any of the preceding claims, wherein the dissolving of substance A and/or substance B in the particular fluid takes place using pressure vessels.

5. A process as claimed in any of the preceding claims, wherein the decompression is effected by decompression apparatuses.

6. A process as claimed in any of the preceding claims, wherein a fluid is returned to the dissolving zone and reused as compressed fluid for dissolving substance A and/or substance B.

7. A process as claimed in any of the preceding claims, wherein the particle stream is removed by suitable separating apparatuses, for example cyclones, fabric filters, scrubbers or electrofilters.

8. A process as claimed in any of the preceding claims, wherein at least one substance B is a polymer, lipid, carbohydrate or peptide.

9. A process as claimed in any of the preceding claims, wherein at least one substance A is a dye, vitamin, carotenoid, liposome, pharmaceutical active substance, plant active substance, fragrance or flavoring.

10. A process as claimed in any of the preceding claims, wherein at least one fluid is C₁-C₆-hydrocarbons, C₁-C₄-alcohols, sulfur hexafluoride, nitrogen, noble gases, gaseous oxides, acetone, halogenated hydrocarbons, ammonia or water or mixtures of these substances mentioned.

11. An apparatus for carrying out a process as claimed in any of the preceding claims, which has a high-pressure autoclave (2) for dissolving the substance(s) A in a supercritical fluid and a second high-pressure autoclave (6) for dissolving the substance(s) B in a supercritical fluid, and which has two separate feed lines (3) and (7) with which the fluids loaded with A and B respectively are connected to decompression apparatuses (4) and (8) respectively, which decompress the two fluids separately and are arranged so that the material streams escaping from them mutually intersect at least in part.

## Revendications

1. Procédé pour la préparation de poudres stables finement divisées, dans lequel une ou plusieurs substances A et une ou plusieurs substances B sont dissoutes dans des fluides surcritiques, et les solutions sont détendues le long d'un trajet de temporisation,
**caractérisé par le fait que** la(les)
- substance(s) A et substance(s) B sont dissoutes dans des fluides surcritiques à chaque fois séparés;
- les trajets de temporisation se traversent, tandis que la limite de solubilité de A dans le fluide est dépassée à un moment antérieur à la limite de solubilité de B dans le fluide correspondant.

2. Procédé selon la revendication 1, **caractérisé par le fait qu'**au moins une substance B est un stabilisant.

3. Procédé selon l'une des revendications précédentes, **caractérisé par le fait que** les trajets de temporisation sont des cônes de projection.

4. Procédé selon l'une des revendications précédentes, **caractérisé par le fait que** la dissolution de la substance A et/ou de la substance B dans le fluide concerné est effectuée au moyen de l'utilisation de récipients sous pression.

5. Procédé selon l'une des revendications précédentes, **caractérisé par le fait que** la détente est effectuée par détente au moyen de dispositifs de détente.

6. Procédé selon l'une des revendications précédentes, **caractérisé par le fait qu'**un fluide est recyclé dans la zone de dissolution et employé conjointement comme fluide comprimé pour la dissolution de la substance A et/ou de la substance B.

7. Procédé selon l'une des revendications précédentes, **caractérisé par le fait que** le courant de particules est séparé par l'intermédiaire de dispositifs de séparation appropriés, par exemple des cyclones, des filtres en tissu, des laveurs ou des électrofiltres.

8. Procédé selon l'une des revendications précédentes, **caractérisé par le fait qu'**au moins une substance B est un polymère, un lipide, un hydrate de carbone ou un peptide.

9. Procédé selon l'une des revendications précédentes, **caractérisé par le fait qu'**au moins une substance A est un colorant, une vitamine, un caroténoïde, un liposome, ue substance à activité pharmaceutique, une substance à activité sur les plantes, une substance odorante ou une substance aromatique.

10. Procédé selon l'une des revendications précédentes, **caractérisé par le fait qu'**il s'agit pour au moins un fluide d'hydrocarbures en C₁-C₆, d'alcools en C₁-C₄, d'hexafluorure de soufre, d'azote, de gaz rares, d'oxydes gazeux, d'acétone, d'hydrocarbures halogénés, d'ammoniac ou d'eau ou d'un mélange de ces substances mentionnées.

11. Dispositif pour la réalisation d'un procédé selon l'une des revendications précédentes, **caractérisé par** un autoclave à haute pression (2) pour la dissolution de la(des) substance(s) A dans un fluide surcritique et un deuxième autoclave à haute pression (6) pour la dissolution de la(des) substance(s) B dans un fluide surcritique et par deux conduites d'alimentation séparées (3) et (7), avec lesquelles le fluide respectivement A et B est mis en relation avec des dispositifs de détente respectivement (4) et (8), qui détendent séparément les deux fluides et sont agencés de telle manière que les deux courants de matière qui en sortent se coupent respectivement au moins partiellement.
